# EUROPEAN PATENT APPLICATION

(11) **EP 1 296 268 A1**
(43) Date of publication of application: **26.03.2003**
(21) Application number: 02256558.4
(22) Date of filing: 20.09.2002
(51) Int. Cl.: G06F 17/60

(54) **Method and apparatus for the automation of rental procedures**

(30) Priority: 21.09.2001 GB 0122873
(71) Applicant: Hewlett-Packard Company, Palo Alto, CA 94304 (US)
(72) Inventor: Salle, Mathias Jean Rene, Palo Alto, CA 94306 (US)
(74) Representative: Lawrence, Richard Anthony

(57) **Abstract**

The invention concerns an apparatus and method for the automation of rental procedures. In one aspect of the invention, there is provided a method comprising the steps of: (1) in an on-line contract initiation phase between a user and a rental company(a)remotely browsing resources of the rental company; (b) when it is established by the user that the rental company has a resource required for rental by the user, remotely checking availability of the required resource; (c) electronically transferring a rental agreement contract from the rental company to a user device for inspection by the user; (d) if following inspection the user agrees with the contract terms, then electronically signalling acceptance by the user. Whilst (2) at the resource location there are performed the further steps of: (a)reading the contract from a hand-held user device and determining the state of fulfilment of the contract; and (b)when all necessary contract terms have been complied with by the user, releasing the rental resource to the user.

## Description

The invention relates to a method and apparatus for the automation of rental procedures.

At present, the rental process, whether this be rental of a physical article or of a service is generally carried out manually. At present, it is possible to reserve or book a resource on-line, and then the automated part of the process stops.

It is an aim of preferred embodiments of the present invention to provide a means by which the rental process may be automated.

According to a first aspect of the invention, there is provided a method for the automation of rental procedures, the method comprising the steps of:
in an on-line contract initiation phase between a user and a rental company:
   remotely browsing resources of the rental company;
   when it is established by the user that the rental company has a resource required for rental by the user, remotely checking availability of the required resource;
   electronically transferring a rental agreement contract from the rental company to a user device for inspection by the user; and
   if following inspection the user agrees with the contract terms, then electronically signalling acceptance by the user;
at the resource location:
reading the contract from a hand-held user device and determining the state of fulfilment of the contract; and
when all necessary contract terms have been complied with by the user, releasing the rental resource to the user.

According to a second aspect of the invention, there is provided an apparatus for the automation of rental procedures, the apparatus comprising a user device, an information server, a contract reader and a rental resource, wherein:
during an on-line contract initiation phase: the user device is utilised by a user to browse resources of a rental company held on the information server; when it is established that the rental company has a resource required for rental by the user, remotely checking availability of the required resource; electronically transferring a rental agreement contract from the information server to the user device for inspection by the user; if following inspection the user agrees with the contract terms, then signalling acceptance by the user from the user device; and
at the resource location: using a contract reader, reading the contract from a hand-held user device and determining the state of fulfilment of the contract; and when all necessary contract terms have been complied with by the user, releasing the rental resource to the user.

In a third aspect, there is provided an apparatus for the automation of rental procedures, the apparatus comprising:
a user device at a user location, the user device comprising a controller, memory, input/output interface for interaction with the user and a communications interface;
an information server held by or on behalf of a rental company at a location remote from the user, the information server comprising a controller, a communications interface and a database, the database being arranged for storing details regarding: (I) rental resources normally available for rental from the rental company; (II) details concerning their availability for rental on particular dates; and (III) rental agreements;
a contract reader at the location of a rental resource arranged to read a contract from a portable device and dependent upon the read contract release the rental resource to the contract bearer;
wherein: under control of the controller of the user device, the input/output interface and communications interface of the user device respectively facilitate the input of user selection criteria and the remote browsing for rental resources held by the rental company, details of which are contained in the database of the information server; under control of the controller of the information server, the communications interface of the information server is arranged to support user browsing of details of the rental resources contained on the database and to provide such details, including details as to the availability of particular rental resources on particular dates, to the user device and, where requested, to submit a rental agreement relating to user rental of the rental resource to the user device; and, if the terms of said rental agreement are acceptable to the user, the user device is arranged to electronically signal acceptance to the information server and comply with requested contract terms in the rental agreement, the state of fulfilment of the contract terms of said rental agreement being transmitted to the user device from the information server; and, at the rental resource location, presentation of a portable device containing details of the rental agreement and the state of fulfilment of the contract terms of said rental agreement to the contract reader enables reading of said agreement and fulfilment state by said contract reader and, when all necessary contract terms have been complied with by the user, the contract reader is arranged to authorise the release of said rental resource to the user.

In preferred arrangements, the contract reader comprises a communications interface, a controller and storage, arranged such that the communications interface of the contract reader receives the details of rental agreement and state of fulfilment of the contract terms and the controller analyses these to assess whether the resource may be authorised for release to the user and, where release is to be authorised, release of the resource to the user is automatically affected by a release mechanism of the resource.

If following analysis of the state of fulfilment it is discovered that one or more contract terms remain to be complied with by the user before release may be authorised, the user may be invited to comply with such terms.

Preferably, following inspection and acceptance of the contract by the user, at least partial compliance is made with the contract terms and signalled to the rental company.

The initiation phase may further comprise the step of transferring an indication of receipt of the at least partial compliance from the rental company to the user device and modifying the contract accordingly.

The user device utilised in the contract initiation phase may be the hand-held device utilised at the rental resource depot. Alternatively, the user device may be arranged to transfer the contract to the hand-held device.

If following inspection during the initiation phase the user does not agree with the terms, then a negotiation phase may be undertaken in which alternative terms may be suggested. If user and rental company are able to reach agreement during the negotiation phase then the user preferably signals acceptance from the user device and may if required perform an at least partial compliance.

The user device may comprise a mobile internet enabled device.

The hand-held user device may have wireless transmission capability for transferring details of the contract to the contract reader. Alternatively, the hand-held user device may have an interface for physical connection to the contract reader.

Where no or only partial compliance with contract terms was made during the initiation phase, full compliance may be completed at the resource location.

Preferably, the contract reader is physically associated with the rental resource.

Preferably, the contract may be modified or extended by the user at the rental resource location, either at a time of collection of the resource or during the rental period.

Preferably, the rental resource is provided with communication means for communicating desired changes to the contract to the rental company and for implementing authorised changes to the contract.

The rental resource may further be provided with one or more sensors for monitoring one or more physical properties associated with the resource and checking whether a condition of such one or more properties is in accordance with the agreed contract. For instance, location of the resource may be monitored by a GPS sensor and monitored to ensure that the resource is being utilised in an authorised location.

For a better understanding of the invention, and to show how embodiments of the same may be carried into effect, reference will now be made, by way of example, to the accompanying diagrammatic drawings in which:
Figure 1 illustrates schematically an interaction between a user and a rental services provider according to an embodiment of the invention;
Figure 2 illustrates schematically interactions between a user device and a rental resource;
Figure 3 is a flow diagram illustrating interactions at a user location in accordance with an embodiment of a method of the invention; and
Figure 4 is a flow diagram illustrating interactions at a rental resource location in accordance with an embodiment of a method of the invention.

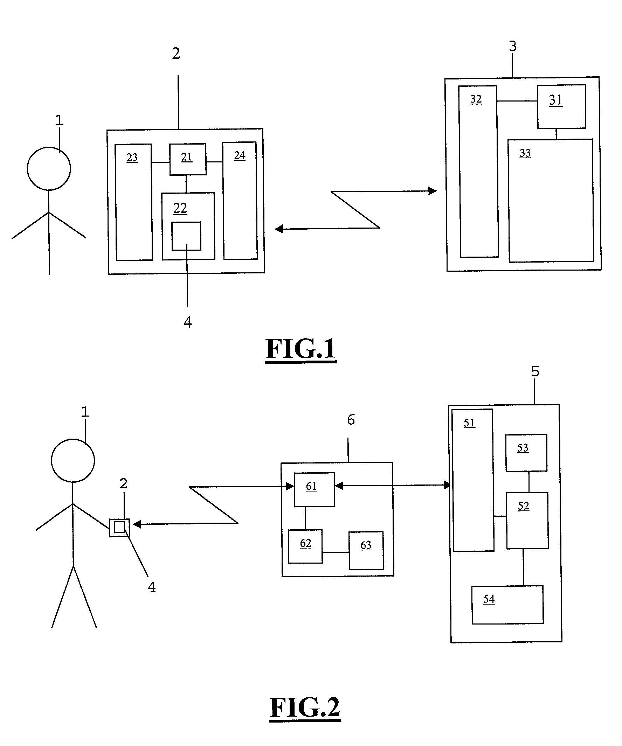

Referring now to figure 1, there is shown schematically a user 1, having a user device 2 such as a PDA, laptop, palmtop computer or similar, and an information server 3 of a rental resource. The user device 2 is a wireless device including means for accessing a distributed network such as the internet. Information server 3 may comprise a server computer providing access to a rental database of the rental company or other rental resource.

In more detail, the user device 2 typically comprises a controller 21, memory 22, input/output interface 23 for interaction with the user 1 and a communications interface 24 for interaction with, in this example, the internet.

The information server 3 typically comprises a controller 31, a communications interface 32 (to enable for example communications via the internet) and a database 33 in which details of resources normally available for rental are stored, along with details concerning availability of such resources on particular dates and rental agreements relating to such resources.

Using the user device 2 and information server 3, the user may browse through the resources of the rental company by the input of relevant selection criteria etc. and decide exactly what resource it is that he wishes to rent and check availability of the resource.

The user may also determine whether or not the contract, which is downloaded for viewing from the database 33 of the information server 3 to the memory 22 of the user device 2 (via communications interfaces 32, 24 under control respectively of controllers 31,21), imposed by the rental company meets with his or her requirements. Upon establishing that the user does indeed wish to rent one or more resources of the rental company, the user electronically signals his or her acceptance to that effect and the contract 4between user 1 and rental resource may be established between user and rental company.

On the other hand, if the user considers that the contract is not quite in line with his requirements and if the rental company allows for the possibility of negotiation, then the user may attempt to negotiate a better contract. Such negotiation may be automated, or may require the intervention of an employee or other representative of the rental company. If agreement can be reached then upon establishing that the user does indeed wish to rent one or more resources of the rental company, the user electronically signals his or her acceptance to that effect and an appropriate contract (again schematically illustrated as reference 4) between user 1 and rental resource is established.

Where necessary or desired, the user 1 consults the contract 4 and performs any initial steps required for either partial or full compliance at that time. Here, the user 1 may opt to, for instance, transfer credit card details to the rental company via a secure connection, to reserve the rental resource and, in return, the rental company remotely updates the contract 4 held on the user device 2 to denote this.

The contract 4 held on the user device 2 is arranged to reflect at all times the true state of fulfilment thereof and cannot be modified without the express cooperation of the two parties (user and rental company). In this way, the contract 4 held on the user device 2 at the close of on-line negotiations, and/or after voluntary or obligatory fulfilment of some or all contract terms by the user, reflects the truly agreed position and is also available for printout as a hard copy (if required).

Referring now to figure 2, there is shown interaction between user 1, user device 2, a rental resource 5 and a contract reader 6.

The rental resource 5 may, for instance, be a rental car.

In order to allow the user 1 to take delivery of the rental car 5, the user 1 simply needs to take along his user device 2 on which his electronic contract 4 has been established. The contract reader 6 associated with the resource 5 comprises a communications interface 61, controller 62 and storage 63. The contract reader interfaces with the user device 2 and interrogates it to establish validity of the contract 4 prior to releasing the resource 5 to the user 1. Typically, the contract reader 6 has a communications interface 61 for interfacing with the communications interface 24 of the user device 2 and by means of a controller 62 interrogates the user device 2 to transfer the contract 4 from memory 22 to storage 63 for analysis by controller 62.

The contract reader 6 may be present on or in the resource itself, for instance it may be interfaced to a resource controller forming an integral part of the resource 5.

In the example shown in the figure, the resource 5 is assumed to be separate from the card reader 6 and to comprise a communications interface 51 to communicate with the card reader 6, a controller 52, storage 53 and a release mechanism 54. On the other hand, in cases where the card reader forms a part of the resource 5, the extra storage, controller and communications interface associated with one of the two entities may be omitted.

Upon the controller 62 establishing contract validity and ensuring that all necessary contract terms required for release of the resource 5 have been fully complied with (if not already attended to, full compliance may be achieved there and then), the rental resource 5 is released to the user 1. Release may take place in many ways. In a first example, transfer of an authorisation code from the communications interface 61 of the card reader 6 to the user device 2 may be done to enable subsequent activation of resource 5 by direct communication between the communications interfaces of the user device 2 and resource 5. A second manner may be to load storage 53 of the resource 5 directly with user details and contract limitations from the card reader to enable the resource to identify the user and subsequently monitor any necessary contractual details. Each of the aforementioned methods and others compatible with the teachings of the invention are arranged to enable the resource 5 to function within the limitations defined by the rental agreement.

The release mechanism 54 may comprise a control unit for one or more solenoids of the resource to enable power application or disable mechanical blocking etc., or any other type of enablement.

Upon release of the resource 5, by the contract reader 6, the contract reader 6 is arranged to send a wireless signal to the information server 3 to indicate that the rental period has begun.

During the rental itself, any relevant sensors associated with the resource 5 (not shown) may be active to provide monitoring of the terms of the contract. For instance, it may be a term of the contract 4 that the resource be used purely within a particular geographical area or else a supplement may be due. In such a case, a GPS sensor may be arranged to monitor movement of the resource 5, and communicate to controller 52 a position. The controller 52 of the resource 5 may then consult a stored copy of the contract from storage 53 and check if the position signalled is an allowable one. If it is discovered that a contract term is breached, the resource controller 52 may warn the user via a display unit (not shown) that he is in breach of contract and that resource use will be inhibited unless a supplement payment is made. The user can then decide whether to authorise further payment or to immediately recommence the previously authorised use.

Equally, it will be appreciated that the controller 52 may be arranged to transmit details of the contract breach via communications interface 51 (or other means) to the information server 3. Here, whether to invoke automatic extra user billing or to cause resource disablement may be a decision taken centrally by the controller 31 of the information server 3, rather than locally by the resource controller 51.

It will be appreciated that the original contract may be arranged to be sufficiently flexible to allow plural types of use of a resource and to debit a user account accordingly. Therefore, drastic action such as inhibiting resource function via release means 54 may be confined to a last resort - for instance, if it is clear that the resource is being tampered with illegally or stolen.

Upon returning of the resource to its rental location, any outstanding formalities may be attended to by means of interactions between the contract reader 6 and the user device 2. Such formalities may include the transfer of an electronic receipt to the user device.

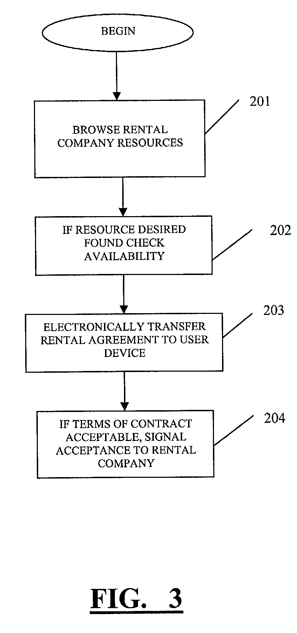

Figure 3 illustrates in flow diagram form, the basic interactions that occur between user and rental resource at a user location during and initial phase of a method according to an embodiment.

In a first step 201 of the method, the user browses the resources of the rental company, for instance, via a web browser.

In a second step, if a desired resource is located, availability during a desired period of use by the user is checked.

If the resource is available when the user requires it, then in step 203 a draft rental agreement is sent to the user electronically for perusal by the user at a user device. The user device here may be a home PC, a PDA etc..

In step 204, assuming the terms of the contract such as price and other conditions are acceptable, then the user signals acceptance to the rental company, typically by web browser or email interaction.

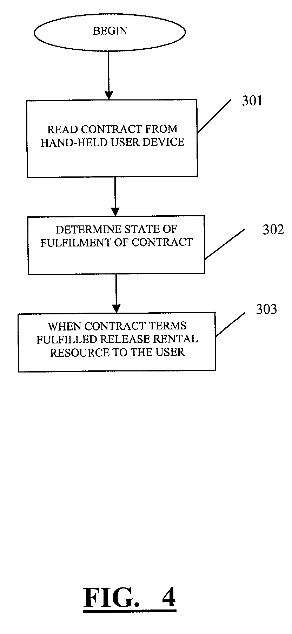

Figure 4 illustrates in flow diagram form, the basic interactions that occur at the resource location at commencement of the agreed time of rental.

In a first step 301, the rental agreement is read by contract reader 6 from the hand-held device 2 of the user.

In a second step 302 the contract reader determines the state of fulfilment of the presented contract and in step 303, if sufficient contract terms have been fulfilled to allow release of the rental resource, then the resource is released to the user.

It will be appreciated that many variations in the invention disclosed may be made by the man skilled in the art. For instance, whilst the user device 2 used during contract initiation is shown and referred to as being the same device as is used at the resource location, it will be appreciated that this need not be the case (e.g. initiation by desktop PC and then download of contract to a portable user device). Where wireless connections are shown, wired connections may be substituted (and vice versa) and that local operations may be substituted for remote operations (and vice versa). The scope of the present invention is limited only by the appended claims.

## Claims

1. A method for the automation of rental procedures, the method comprising the steps of:
in an on-line contract initiation phase between a user and a rental company:
remotely browsing resources of the rental company;
when it is established by the user that the rental company has a resource required for rental by the user, remotely checking availability of the required resource;
electronically transferring a rental agreement contract from the rental company to a user device for inspection by the user;
if following inspection the user agrees with the contract terms, then electronically signalling acceptance by the user;
at the resource location:
reading the contract from a hand-held user device and determining the state of fulfilment of the contract; and
when all necessary contract terms have been complied with by the user, releasing the rental resource to the user.

2. The method of claim 1, wherein following inspection and acceptance of the contract by the user, at least partial compliance is made with the contract terms and signalled to the rental company.

3. The method of claim 1 or 2, wherein the initiation phase further comprises the step of transferring an indication of receipt of the at least partial compliance from the rental company to the user device and modifying the contract accordingly.

4. The method of claim 1, 2 or 3, wherein the contract is transferred electronically from the hand-held device to the contract reader.

5. The method of any preceding claim, wherein the hand-held user device utilised at the resource location is the user device utilised in the initiation phase.

6. The method of any preceding claim, wherein where no or only partial compliance with contract terms was made during the initiation phase, full compliance is completed at the resource location.

7. The method of any preceding claim, wherein the contract may be modified or extended by the user at the rental resource location, either at a time of collection of the resource or during the rental period.

8. The method of any preceding claim, wherein the rental resource is arranged to communicate desired changes to the contract to the rental company and for implementing authorised changes to the contract.

9. The method of any preceding claim, wherein following release of the resource to the user one or more physical properties associated with the resource are monitored to check whether a condition of such one or more properties is in accordance with the agreed contract.

10. A method according to any preceding claim, wherein if following inspection during the initiation phase the user does not agree with the terms, then a negotiation phase may be undertaken in which alternative terms may be suggested.

11. A method according to claim 10, wherein if user and rental company are able to reach agreement during the negotiation phase then the user preferably signals acceptance from the user device and performs at least partial compliance.

12. An apparatus for the automation of rental procedures, the apparatus comprising a user device (2), an information server (3), a contract reader (6) and a rental resource (5), wherein:
during an on-line contract initiation phase: the user device (2) is utilised by a user to browse resources of a rental company held on the information server (3); when it is established that the rental company has a resource required for rental by the user, remotely checking availability of the required resource (5); electronically transferring a rental agreement contract from the information server (3) to the user device for inspection by the user; if following inspection the user agrees with the contract terms, then signalling acceptance by the user from the user device; and
at the resource location: using the contract reader (6), reading the contract from a hand-held user device (2) and determining the state of fulfilment of the contract; and when all necessary contract terms have been complied with by the user, releasing the rental resource to the user.

13. The apparatus of any of claim 12, wherein the rental resource (5) is provided with communication means (51) for communicating desired changes to the contract (4) to the rental company and for implementing authorised changes to the contract.

14. An apparatus for the automation of rental procedures, the apparatus comprising:
a user device (2) at a user location, the user device comprising a controller (21), memory (22), input/output interface (23) for interaction with the user and a communications interface (24) ;
an information server (3) held by or on behalf of a rental company at a location remote from the user, the information server (3) comprising a controller (31), a communications interface (32) and a database (33), the database (33) being arranged for storing details regarding: (I) rental resources normally available for rental from the rental company; (II) details concerning their availability for rental on particular dates; and (III) rental agreements;
a contract reader (6) at the location of a rental resource arranged to read a contract from a portable device and dependent upon the read contract release the rental resource to the contract bearer;
wherein: under control of the controller (21) of the user device, the input/output interface (23) and communications interface (24) of the user device respectively facilitate the input of user selection criteria and the remote browsing for rental resources held by the rental company, details of which are contained in the database (33) of the information server (3); under control of the controller (31) of the information server (3), the communications interface (32) of the information server (3) is arranged to support user browsing of details of the rental resources contained on the database (33) and to provide such details, including details as to the availability of particular rental resources on particular dates, to the user device (2) and, where requested, to submit a rental agreement relating to user rental of the rental resource to the user device (2); and, if the terms of said rental agreement are acceptable to the user, the user device (2) is arranged to electronically signal acceptance to the information server (3) and comply with requested contract terms in the rental agreement, the state of fulfilment of the contract terms of said rental agreement being transmitted to the user device (2) from the information server (3); and, at the rental resource location, presentation of a portable device containing details of the rental agreement and the state of fulfilment of the contract terms of said rental agreement to the contract reader (6) enables reading of said agreement and fulfilment state by said contract reader and, when all necessary contract terms have been complied with by the user, the contract reader is arranged to authorise the release of said rental resource to the user.

15. The apparatus of claim 12, 13 or 14, wherein the contract reader (6) comprises a communications interface (61), a controller (62) and storage (63), arranged such that the communications interface (61) of the contract reader (6) receives the details of rental agreement and state of fulfilment of the contract terms and the controller (62) analyses these to assess whether the resource (5) may be authorised for release to the user and, where release is to be authorised, release of the resource to the user is automatically affected by a release mechanism (54) of the resource.

16. The apparatus of claim 15, wherein, if following analysis of the state of fulfilment it is discovered that one or more contract terms remain to be complied with by the user before release may be authorised, the user is invited to comply with such terms.

17. The apparatus of any of claims 12 to 16, wherein the user device utilised in the contract initiation phase comprises the hand-held device utilised at the rental resource location.

18. The apparatus of any of claims 12 to 16, wherein the user device is arranged to transfer the contract to the hand-held device.

19. The apparatus of any of claims 12 to 18, wherein the user device comprises a mobile internet enabled device.

20. The apparatus of any of claims 12 to 19, wherein the contract reader (6) is physically associated with the rental resource (5).

21. The apparatus of any of claims 12 to 20, wherein the rental resource (5) is provided with one or more sensors for monitoring one or more physical properties associated with the resource and checking whether a condition of such one or more properties is in accordance with the agreed contract.

22. The apparatus of any of claims 12 to 21, wherein the hand-held user device has wireless transmission capability for transferring details of the contract to the contract reader (6).

23. The apparatus of any of claims 12 to 22, wherein the hand-held user device includes an interface for physical connection to the contract reader.
